# EUROPÄISCHE PATENTSCHRIFT

(11) **EP 1 444 474 B1**
(45) Veröffentlichungstag und Bekanntmachung des Hinweises auf die Patenterteilung: **16.12.2009**
(21) Anmeldenummer: 02779275.3
(22) Anmeldetag: 24.08.2002
(51) Int. Cl.: F28F 9/00

(54) **WÄRMEÜBERTRAGER**
THERMAL CONDUCTOR
DISPOSITIF DE TRANSMISSION DE CHALEUR

(30) Priorität: 24.10.2001 DE 10152595
(43) Veröffentlichungstag der Anmeldung: 11.08.2004
(73) Patentinhaber: Behr GmbH & Co. KG, 70469 Stuttgart (DE)
(72) Erfinder: SCHINDLER, Martin, 97273 Kürnach (DE); SCHMIDT, Michael, 74321 Bietigheim-Bissingen (DE)
(74) Vertreter: Grauel, Andreas
(86) Internationale Anmeldenummer: PCT/EP2002/009487
(87) Internationale Veröffentlichungsnummer: WO 2003/036214

(56) Entgegenhaltungen:
- EP-A- 0 422 370
- DE-A- 3 435 093
- DE-A- 10 009 179
- DE-U- 29 612 361
- FR-A- 2 625 301
- US-A- 4 974 569
- US-A- 5 022 581
- US-A- 5 584 340
- US-A- 6 129 142

## Beschreibung

Die Erfindung bezieht sich auf einen Abgaswärmeübertrager mit einem von Abgas durchströmbaren Rohrbündel und einem von einem Kühlmittel, durchströmbarem Gehäuse, wobei die Rohrenden des Rohrbündels stoffschlüssig mit den Rohrböden und die Rohrböden stoffschlüssig mit dem Gehäuse verbunden sind, wobei das Gehäuse ein Dehnungselement aufweist.

Ein solcher Abgaskühler ist durch die DE 296 12 361 U1 bekannt geworden.

Ein Wärmetauscher als Abgaswärmeübertrager wurde auch durch die DE-A 199 07 163 der Anmelderin bekannt. Bei dieser bekannten Bauweise sind die Rohrenden eines Rohrbündels in einem Rohrboden in entsprechenden Öffnungen aufgenommen und mit dem Rohrboden verschweißt. Das Rohrbündel mit den beiden Rohrböden ist in einem Gehäuse angeordnet, wobei die Rohrböden umfangsseitig mit dem Gehäusemantel verschweißt sind. Somit sind die Rohre über den Rohrboden mit dem Gehäuse fest verbunden, was unter bestimmten Bedingungen zu thermischen Spannungen führen kann. Die Rohre werden innen von heißem Abgas durchströmt und außen von kälterem Kühlmittel, welches auch die Innenseite des Gehäuses umspült. Insbesondere bei größeren Rohrlängen eines solchen Abgaswärmeübertragers, z. B. für Nutzfahrzeuge, können die unterschiedlichen Dehnungen von Rohren und Gehäusemantel zu nicht mehr zulässigen Spannungen führen, was beispielsweise eine Zerstörung der Rohr-Boden-Verbindung zur Folge haben kann.

Es ist daher Aufgabe der Erfindung, einen Abgaswärmeübertrager der eingangs genannten Art dahingehend zu verbessern, daß thermische Spannungen auf Grund unterschiedlicher Dehnungen reduziert oder vermieden werden, so daß der Wärmeübertrager die in Fahrzeugen übliche Lebensdauer erreicht.

Diese Aufgabe wird durch die Merkmale des Patentanspruches 1 gelöst.

Vorzugsweise wird die Aufgabe bei einem Abgaswärmeübertrager mit einem von Abgas durchströmbaren Rohrbündel und einem von einem Kühlmittel durchströmbarem Gehäuse, wobei die Rohrenden des Rohrbündels stoffschlüssig mit den Rohrböden und die Rohrböden stoffschlüssig mit dem Gehäuse verbunden sind, dadurch gelöst dass auf dem Gehäuse ein als Metallbalg ausgebildetes Abdichtungselement angeordnet ist, das das Dehnungselement überdeckt und abdichtet und dass als Dehnungselement das Gehäuse oder ein Bereich des Gehäuses quer zur Längsrichtung der Rohre und in Umfangsrichtung des Gehäuses verlaufende Schlitze aufweist, die sich jeweils nur über einen Teil des Umfanges erstrecken und sich mit axial versetzt angeordneten Schlitzen in Umfangsrichtung teilweise überlappen.

Auch kann es vorteilhaft sein, wenn das Dehnungselement einteilig mit einem Abdichtungselement ausgebildet ist.

Weiterhin ist es zweckmäßig, wenn das Dehnungselement als umlaufende Sicke ausgebildet ist.

Besonders vorteilhaft ist es weiterhin, wenn auf dem Gehäuse ein Abdichtungselement, wie beispielsweise Metallbalg oder ein anderes Abdichtungselement zum Beispiel aus Kunststoff oder einem Elastomer, angeordnet ist, der das Dehnungselement überdeckt und abdichtet.

Auch kann das Dehnungselement einteilig mit dem Abdichtungselement ausgebildet sein, wie beispielsweise als umlaufende Sicke, die gleichzeitig Abdichtfunktion und Dehnungsfunktion übernimmt.

Vorteilhaft ist dabei, wenn das Dehnungselement zumindest ein mit Schlitzen versehenen Bereich des Gehäuses ist. Zweckmäßig ist dabei, wenn als Dehnungselement das Gehäuse oder ein Bereich des Gehäuses quer zur Längsrichtung der Rohre und in Umfangsrichtung des Gehäuses verlaufende Schlitze aufweist, die sich jeweils nur über einen Teil des Umfanges erstrekken und sich mit axial versetzt angeordneten Schlitzen in Umfangsrichtung teilweise überlappen.

Dabei kann es bei einem Ausführungsbeispiel zweckmäßig sein, wenn zumindest eine Gruppe von Schlitzen mit zumindest zwei Schlitzen in dem Gehäuse vorgesehen ist. Vorteilhaft ist es, wenn die zumindest eine Gruppe von Schlitzen in einem mittleren Bereich des Gehäuses, in Längsrichtung des Wärmeübertragers betrachtet, angeordnet ist.

Auch ist es vorteilhaft, wenn die zumindest eine Gruppe von Schlitzen in einem Endbereich bzw. nahe eines Endbereichs des Gehäuses, in Längsrichtung des Wärmeübertragers betrachtet, angeordnet ist.

Bei einem weiteren Ausführungsbeispiel ist es vorteilhaft, wenn zwei Gruppen von Schlitzen vorgesehen sind. Dabei kann es vorteilhaft sein, wenn die beiden Gruppen von Schlitzen an den beiden Endbereichen oder nahe den Endbereichen des Gehäuses angeordnet sind. Ebenso kann es zweckmäßig sein, wenn die Gruppen von Schlitzen zumindest zwei, oder eine Vielzahl von Schlitzen, wie drei, vier, fünf, sechs etc. Schlitze aufweist.

Gemäß eines weiteren erfindungsgemäßen Gedankens kann es zweckmäßig sein, wenn in dem Gehäuse oder in einer Gruppe von Schlitzen vier Schlitze angeordnet sind, wobei sich jeweils zwei in einer von zwei Querebenen über weniger als den halben Umfang erstrecken und wobei den nicht geschlitzten Bereichen einer Querebene geschlitzte Bereiche der anderen Querebene gegenüber liegen.

Erfindungsgemäß ist es bei einem weiteren Ausführungsbeispiel zweckmäßig, wenn bei einer Anordnung von zwei Schlitzen pro Gruppe von Schlitzen, die Schlitze beabstandet sind und derart ausgebildet sind, daß sie in einem Teilbereich ihrer Erstreckung nebeneinander verlaufen und einen schmalen Steg zwischen sich belassen.

Bei einer weiteren Ausführungsform der Erfindung ist es zweckmäßig, wenn bei einer Anordnung von drei Schlitzen pro Gruppe von Schlitzen, die Schlitze beabstandet sind und derart ausgebildet sind, daß sie in einem Teilbereich ihrer Erstreckung nebeneinander verlaufen und zwei schmale Stege zwischen sich belassen.

Auch kann es zweckmäßig sein, wenn bei einer Gruppe von Schlitzen über den Umfang des Gehäuses betrachtet zumindest zwei Stege oder eine Vielzahl von Stegen, wie drei, vier etc., ausgebildet sind.

Ebenfalls ist es vorteilhaft, wenn bei einer Gruppe von Schlitzen bei einer Anordnung von zwei Stegen pro Gruppe die Stege sind in radialer Richtung des Gehäuses betrachtet gegenüber liegen.

Weiterhin ist es zweckmäßig, wenn bei einer Gruppe von Schlitzen bei einer Anordnung von zwei oder mehr Stegen pro Gruppe die Stege in Umfangsrichtung des Gehäuses betrachtet gleichmäßig verteilt sind.

Vorteilhaft ist es, wenn vier Stege durch vier Schlitze gebildet werden, die sich an vier Stellen des Gehäuses teilweise überschneiden, d.h., daß sich jeweils zwei Schlitze an einem Bereich teilweise überschneiden und so den Steg bilden.

Zweckmäßig ist es, wenn vier mal zwei parallele Stege durch sechs Schlitze gebildet werden, die sich an vier Stellen des Gehäuses teilweise überschneiden.

Auch ist es zweckmäßig, wenn die Schlitze in ihren Endbereichen eine tropfenförmige Gestalt aufweisen.

Weiterhin ist es zweckmäßig, wenn die Schlitze durch eines der folgenden Verfahren in das Gehäuse eingebracht wird: Laserschneiden, Wasserstrahlschneiden, Sägen, Fräsen, Erodieren oder Stanzen.

Auch ist es vorteilhaft, wenn das Dehnungselement und/oder das Abdichtungselement aus einem der folgenden Materialien gebildet ist: Metall, Stahl, Elastomer, Silikon.

Ebenso ist es zweckmäßig, wenn das Dehnungselement und/oder das Abdichtungselement mit einem Gehäuse teil oder zwei Gehäuseteilen verbunden ist oder mit diesem einteilig ausgebildet ist.

Erfindungsgemäß ist es zweckmäßig, wenn das Dehnungselement und/oder das Abdichtungselement mit dem Gehäuse durch Schweißen, Löten, mittels Spannelementen oder durch Kleben verbunden ist.

Kommt es bei einem solchen Abgaswärmeübertrager zu Dehnungsunterschieden zwischen den Abgasrohren und dem Gehäusemantel, so ist das Gehäuse auf Grund der quer zur Längsrichtung der Rohre verlaufenden Schlitze in der Lage, sich in der gleichen Weise auszudehnen wie die Rohre. Dies geschieht durch eine elastische Verformung des Gehäusemantels im Bereich der Schlitze, genauer gesagt zwischen zwei axial versetzten Schlitzen. Damit das Kühlmittel, welches die Rohre umspült, nicht aus den Schlitzen im Gehäuse ins Freie tritt, ist über den Bereich der Schlitze auf dem Gehäuse ein Metallbalg angeordnet, der für die erforderliche Abdichtung sorgt und gleichzeitig die Dehnungen des Gehäuses mitmachen kann. Auf Grund dieser Maßnahmen werden Thermospannungen und durch sie verursachte Bauteilbeschädigungen oder -zerstörungen auch bei großen Wärmeübertragerlängen vermieden.

Ein Ausführungsbeispiel der Erfindung ist in der Zeichnung dargestellt und wird im Folgenden näher beschrieben: Es zeigen
- Fig. 1: eine perspektivische Ansicht eines Teils eines Abgaswärmeübertra- gers,
- Fig. 2: eine Draufsicht auf einen Teil eines Abgaswärmeübertragers,
- Fig. 3: eine Seitenansicht auf den Teil des Abgaswärmeübertrgers nach Fig. 2 und
- Fig. 4: eine Ansicht eines Teils des Abgaswärmeübertragers mit Metallbalg.
- Fig. 5: ein Ausschnitt eines Wärmeübertragers,
- Fig. 6a bis Fig. 6c: eine Ansicht von Anordnungen von Schlitzen und Stegen und
- Fig. 7: eine Teilansicht eines Wärmeübertragers.

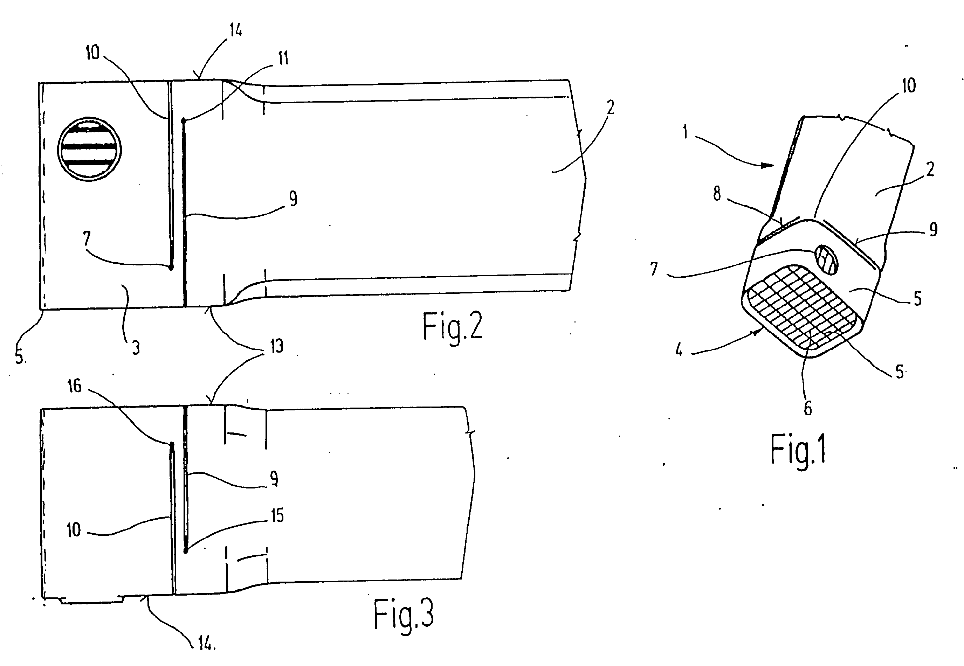

Die Fig. 1 zeigt eine perspektivische Ansicht eines Teils eines Wärmeübertragers, wie insbesondere eines Abgaswärmeübertragers, 1 mit einem im Querschnitt etwa rechteckförmigen Gehäusemantel 2, der sich in seinem stirmseitigen Bereich 3 im Querschnitt etwas vergrößert. Der Querschnitt kann aber ach eine andere Geometrie aufweisen, wie beispielsweise rund, vieleckig, achteckig etc. Die Stirnseite 4 läßt einen Rohrboden 5 mit rechteckförmigen Öffnungen für die Aufnahme von nicht dargestellten Fluidkanälen, wie Abgasrohren, erkennen. Die Rohrenden dieser Abgasrohre sind - wie z. B. in der bereits erwähnten DE-A 199 07 163 beschrieben - mit dem Rohrboden verschweißt, der wiederum umfangsseitig mit dem Gehäusemantel 3 verschweißt ist. Im Gehäusebereich 3 ist eine Öffnung 7 für den Einlaß des Kühlmittels vorgesehen, welches sich in einem nicht dargestellten Ringkanal im Inneren des Gehäusebereiches 3 verteilt und von dort auf der Außenseite der Abgasrohre durch den Wärmeübertrager strömt. Schließlich sind etwa im Übergangsbereich der Gehäusebereiche 2 und 3 drei in Umfangsrichtung des Gehäuses verlaufende Schlitze 8, 9 und 10 erkennbar, wobei der Schlitz 10 gegenüber den beiden Schlitzen 8 und 9 axial versetzt ist und in Umfangsrichtung ebenfalls versetzt ist.

Fig. 2 zeigt diese Schlitze 9 und 10 in einer Aufsicht auf das Gehäuse 2/3 des Wärmeübertragers 1. Die Schlitze 9 und 10 erstrecken sich in Richtung des Gehäuseumfanges bis zu einer kreisförmigen oder tropfenförmigen Öffnung 11 bzw. 12, womit Kerbspannungen in diesem Bereich vermieden werden. Der Schlitz 9 reicht bis an die Außenkante 13 und der Schlitz 10 bis an die Außenkante 14.

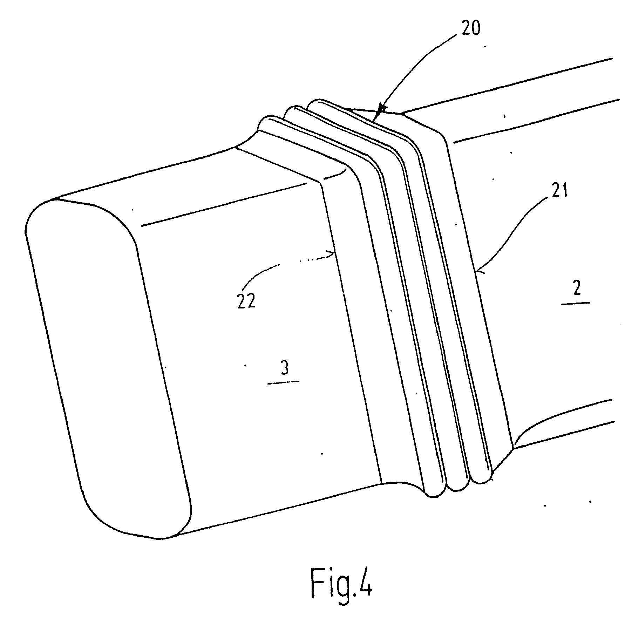

Wie in Fig. 3 erkennbar, verläuft der Schlitz 9 in Umfangsrichtung von der Kante 13 weiter bis zu der kreisförmigen Bohrung 15, und der Schlitz 10 verläuft von der Kante 14 weiter bis zur kreisförmigen Bohrung 16. Beide Schlitze 9 und 10 sind axial etwa um einen Bereich von einigen mm, beispielsweise 5 mm, versetzt. Der Rohrboden ist am stirnseitigen Ende des Gehäuses 3 durch eine gestrichelte Linie 5 angedeutet. Der gesamte Abgaswärmeübertrager 1 ist in den Fig. 1, 2 und 3 insofern unvollständig dargestellt, als eine Abdichtung der Schlitze 9 und 10 nach Außen fehlt - diese Abdichtung in Form eines Metallbalges wird in Fig. 4 beschrieben.

Fig. 4 zeigt eine Ansicht eines Teils des Wärmeübertragers mit den beiden Gehäusebereichen 2 und 3, wobei zwischen diesen Bereichen ein Metallbalg 20 angeordnet ist - dieser überdeckt die in dieser Abbildung nicht erkennbaren Schlitze, wie sie in den vorherigen Figuren 1 bis 3 beschrieben wurden. Der Metallbalg ist an den Querschnitt des Gehäuses 2/3 angepaßt und mit diesem über seine umlaufenden Kanten 21 und 22 dicht verbunden. Dadurch kann kein Kühlmittel mehr aus dem Inneren des Gehäuses über die Schlitze nach Außen treten - gleichzeitig kann dieser Metallbalg 20 die Dehnungen der beiden Gehäusebereiche 2 und 3 ausgleichen.

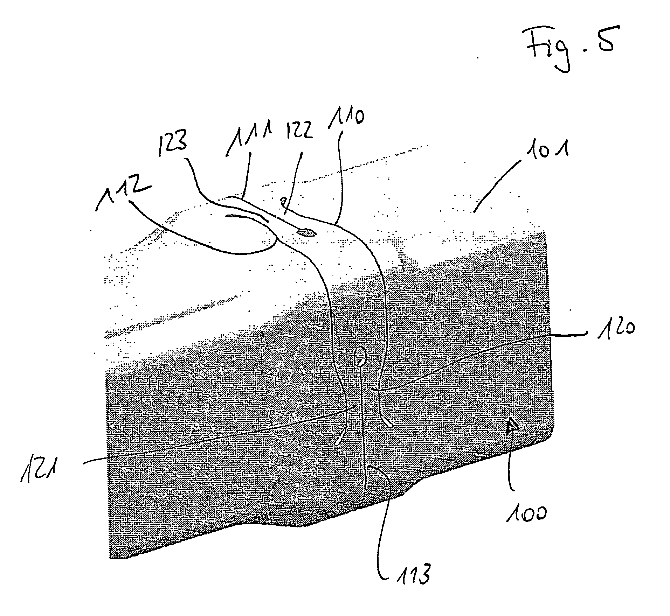

Die Figur 5 zeigt einen Teil eines Wärmeübertragers 100, bei welchem vier Schlitze 110 bis 113 im der Wandung 101 des Gehäuses eingebracht sind, wobei die Schlitze derart axial und in Umfangsrichtung versetzt sind, daß zwischen den Schlitzen Stege verbleiben, die als Dehn- oder Biegebalken wirken.

Dadurch kann der eine Teil des Wärmetauschers derart ausdehnen, so daß der Gehäusemantel des Wärmetauschers durch den oder die Biegebalken flexibel ist und eine Ausdehnung des Gehäuses gewährleistet.

Wie in Figur 5 gezeigt werden pro Fläche des Gehäuses zwei Biegebalken durch die Stege 120 bis 123 gebildet. Wobei dies auf allen vier Flächen der Fall ist, also auch auf den in dieser Ansicht nicht erkennbaren Flächen.

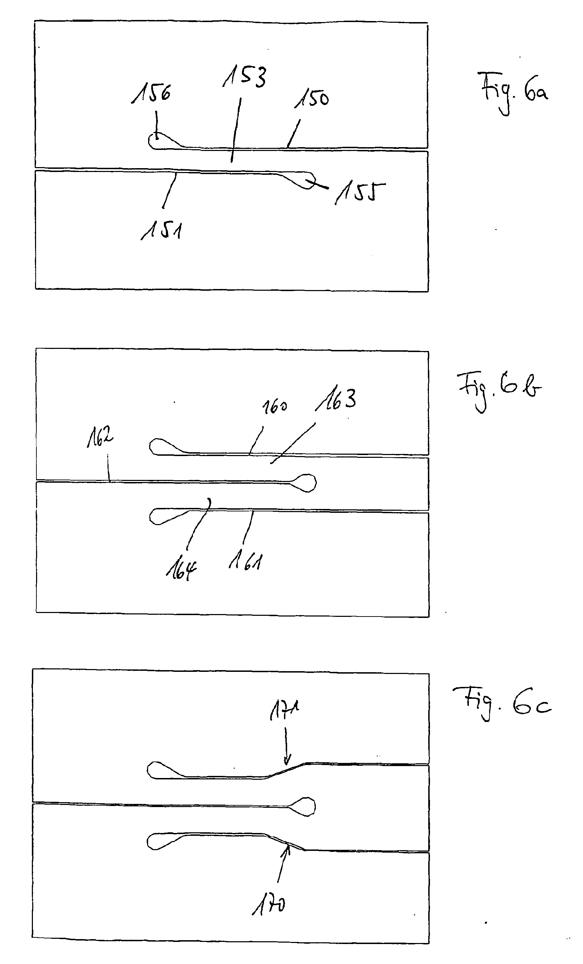

Die Figuren 6a bis 6c zeigen Varianten von Ausbildungen von Schlitzen und Stegen, die im Gehäusemantel eingearbeitet sind, um die Biegebalken auszubilden.

In Figur 6a sind zwei Schlitze 150, 151 gebildet oder in das Gehäuse eingebracht. Zwischen den Schlitzen ist ein Steg 153, der als Biegebalken dient. An den Enden der Schlitze sind tropfenförmige Ausnehmungen vorgesehen. In Figur 6b sind zwei Schlitze 160, 161, 162 gebildet oder in das Gehäuse eingebracht. Zwischen den Schlitzen sind zwei Stege 163 und 164 vorgesehen, die als Biegebalken dient. An den Enden der Schlitze sind tropfenförmige Ausnehmungen vorgesehen.

Die Ausgestaltung der Schlitze der Figur 6c entspricht im wesentlichen der Ausgestaltung Figur 6b, wobei die Schlitze in einem Bereich 170, 171 abgewinkelt. Diese Bereiche können auch gekrümmt sein.

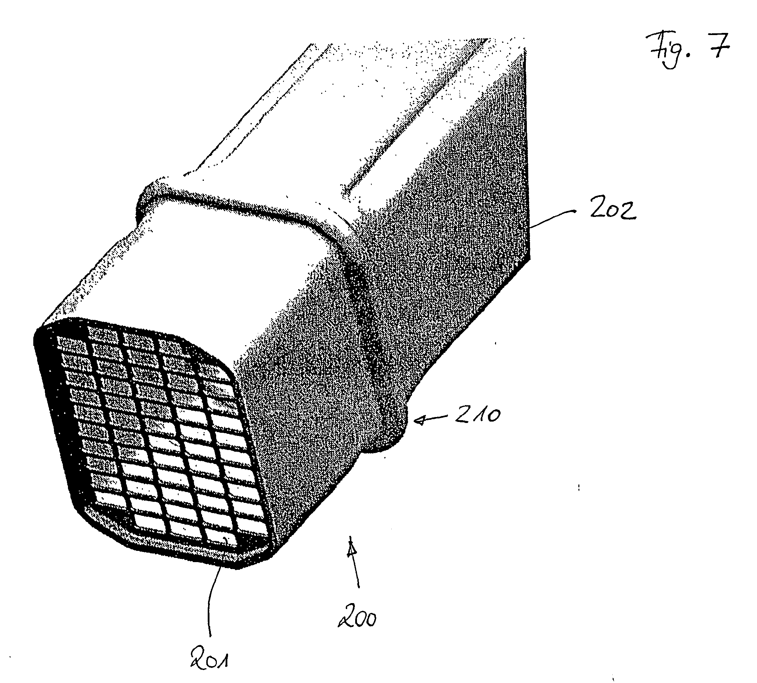

Die Figur 7 zeigt eine Teilansicht eines Wärmeübertragers 200 mit von einem ersten Medium durchströmbaren Fluidkanälen. Im Ausführungsbeispiel eines Abgaswärmetauschers sind dies die Fluidkanäle, durch welche das Abgas strömt.

Zwischen den Fluidkanälen 201 und ggfs. um diese herum kann als weiterer Fluidkanal ein zweites Medium strömen um das Medium i9n dem ersten Fluidkanal zu kühlen. Dieser zweite Fluidkanal befindet sich somit innerhalb des Gehäuses 202.

Zur mechanischen besseren Entkopplung aufgrund der unterschiedlichen thermischen Ausdehnung der Wandungen der Kanäle 201 und dem Gehäuse 202 ist in das Gehäuse an zumindest einer Stelle eine umlaufende Sicke 210 eingebracht. Dadurch kann sich das Gehäuse, das in der Regel im Betrieb des Wämetauschers auf einer niedrigeren Temperatur befindet als die inneren Kanäle ausdehnen, wenn sich die inneren Kanäle aufgrund der thermischen Ausdehnung ausdehnen, ohne daß es zu einer Zerstörung des Wärmetauschers kommt.

Die Sicke 210 ist dabei beispielsweise als halbrunde Auswölbung dargestellt. Sie kann jedoch auch eine andere Form aufweisen, wie beispielsweise in gefalteter oder mäanderförmiger Ausgestaltung. Auch kann die Sicke nach innen gewölbt sein, also als Einbuchtung ausgebildet sein. Zweckmäßig ist bei der Ausbildung der Sicke, daß diese sowohl Dehnungseigenschaften als auch Abdichtungseigenschaften erfüllen kann.

## Patentansprüche

1. Abgaswärmeübertrager (1) mit einem von Abgas durchströmbaren Rohrbündel und einem von einem Kühlmittel durchströmbaren Gehäuse, wobei die Rohrenden des Rohrbündels stoffschlüssig mit den Rohrböden und die Rohrböden stoffschlüssig mit dem Gehäuse verbunden sind, wobei das Gehäuse ein Dehnungselement aufweist, **dadurch gekennzeichnet, dass** auf dem Gehäuse ein als Metallbalg (20) ausgebildetes Abdichtungselement angeordnet ist, das das Dehnungselement überdeckt und abdichtet und dass als Dehnungselement das Gehäuse oder ein Bereich des Gehäuses quer zur Längsrichtung der Rohre und in Umfangsrichtung des Gehäuses verlaufende Schlitze (9,10) aufweist, die sich jeweils nur über einen Teil des Umfanges erstrecken und sich mit axial versetzt angeordneten Schlitzen in Umfangsrichtung teilweise überlappen.

2. Abgaswärmeübertrager nach einem vorhergehenden Anspruch, **dadurch gekennzeichnet, dass** zumindest eine Gruppe von Schlitzen (9,10) mit zumindest zwei Schlitzen in dem Gehäuse vorgesehen ist.

3. Abgaswärmeübertrager nach einem vorhergehenden Anspruch, **dadurch gekennzeichnet, dass** die zumindest eine Gruppe von Schlitzen (9,10) in einem mittleren Bereich des Gehäuses, in Längsrichtung des Wärmeübertragers betrachtet, angeordnet ist.

4. Abgaswärmeübertrager nach einem vorhergehenden Anspruch, **dadurch gekennzeichnet, dass** die zumindest eine Gruppe von Schlitzen (9,10) in einem Endbereich bzw. nahe eines Endbereichs des Gehäuses, in Längsrichtung des Wärmeübertragers betrachtet, angeordnet ist.

5. Abgaswärmeübertrager nach einem der vorhergehenden Ansprüche, **dadurch gekennzeichnet, dass** zwei Gruppen von Schlitzen (9,10) vorgesehen sind.

6. Abgaswärmeübertrager nach Anspruch 5, **dadurch gekennzeichnet, dass** die beiden Gruppen von Schlitzen (9,10) an den beiden Endbereichen oder nahe den Endbereichen des Gehäuses angeordnet sind.

7. Abgaswärmeübertrager nach Anspruch 5, **dadurch gekennzeichnet, dass** die Gruppen von Schlitzen (9,10) zumindest zwei, oder eine Vielzahl von Schlitzen, wie drei, vier, fünf, sechs etc. Schlitze aufweist.

8. Abgaswärmeübertrager nach einem vorhergehenden Anspruch 1 bis 7, **dadurch gekennzeichnet, dass** in dem Gehäuse oder in einer Gruppe von Schlitzen (9,10) vier Schlitze angeordnet sind, wobei sich jeweils zwei in einer von zwei Querebenen über weniger als den halben Umfang erstrecken und wobei den nicht geschlitzten Bereichen einer Querebene geschlitzte Bereiche der anderen Querebene gegenüber liegen.

9. Abgaswärmeübertrager nach einem der vorhergehenden Ansprüche 1 bis 7, **dadurch gekennzeichnet, dass** bei einer Anordnung von zwei Schlitzen pro Gruppe von Schlitzen (9,10), die Schlitze beabstandet sind und derart ausgebildet sind, dass sie in einem Teilbereich ihrer Erstreckung nebeneinander verlaufen und einen schmalen Steg zwischen sich belassen.

10. Abgaswärmeübertrager nach einem der vorhergehenden Ansprüche 1 bis 7, **dadurch gekennzeichnet, dass** bei einer Anordnung von drei Schlitzen pro Gruppe von Schlitzen (9,10), die Schlitze beabstandet sind und derart ausgebildet sind, dass sie in einem Teilbereich ihrer Erstreckung nebeneinander verlaufen und zwei schmale Stege zwischen sich belassen.

11. Abgaswärmeübertrager nach einem der vorhergehenden Ansprüche, **dadurch gekennzeichnet, dass** bei einer Gruppe von Schlitzen (9,10) über den Umfang des Gehäuses betrachtet zumindest zwei Stege oder eine Vielzahl von Stegen, wie drei, vier etc., ausgebildet sind.

12. Abgaswärmeübertrager nach Anspruch 11, **dadurch gekennzeichnet, dass** bei einer Gruppe von Schlitzen (9,10) bei einer Anordnung von zwei Stegen pro Gruppe die Stege sind in radialer Richtung des Gehäuses betrachtet gegenüber liegen.

13. Abgaswärmeübertrager nach Anspruch 11, **dadurch gekennzeichnet, dass** bei einer Gruppe von Schlitzen (9,10) bei einer Anordnung von zwei oder mehr Stegen pro Gruppe die Stege in Umfangsrichtung des Gehäuses betrachtet gleichmäßig verteilt sind.

14. Abgaswärmeübertrager nach einem der vorhergehenden Ansprüche, **dadurch gekennzeichnet, dass** vier Stege durch vier Schlitze gebildet werden, die sich an vier Stellen des Gehäuses teilweise überschneiden.

15. Abgaswärmeübertrager nach einem der vorhergehenden Ansprüche, **dadurch gekennzeichnet, dass** viermal zwei parallele Stege durch sechs Schlitze gebildet werden, die sich an vier Stellen des Gehäuses teilweise überschneiden.

16. Abgaswärmeübertrager nach einem der vorhergehenden Ansprüche, **dadurch gekennzeichnet, dass** die Schlitze (9,10) in ihren Endbereichen eine tropfenförmige Gestalt aufweisen.

17. Abgaswärmeübertrager nach einem der vorhergehenden Ansprüche, **dadurch gekennzeichnet, dass** die Schlitze (9,10) durch eines der folgenden Verfahren in das Gehäuse eingebracht wird: Laserschneiden, Wasserstrahlschneiden, Sägen, Fräsen, Erodieren oder Stanzen.

18. Abgaswärmeübertrager nach einem der vorhergehenden Ansprüche, **dadurch gekennzeichnet, dass** das Dehnungselement und/oder das Abdichtungselement aus einem der folgenden Materialien gebildet ist: Metall, Stahl, Elastomer, Silikon.

19. Abgaswärmeübertrager nach einem der vorhergehenden Ansprüche, **dadurch gekennzeichnet, dass** das Dehnungselement und/oder das Abdichtungselement mit einem Gehäuse teil oder zwei Gehäuseteilen verbunden ist oder mit diesem einteilig ausgebildet ist.

20. Abgaswärmeübertrager nach einem der vorhergehenden Ansprüche, **dadurch gekennzeichnet, dass** das Dehnungselement und/oder das Abdichtungselement mit dem Gehäuse durch Schweißen, Löten, mittels Spannelementen oder durch Kleben verbunden ist.

## Claims

1. Exhaust gas heat exchanger (1) having a tube array through which exhaust gas can flow, and a housing through which a coolant can flow, wherein the ends of the tube array are connected to the tube plates in a cohesive manner, and the tube plates are connected to the housing in a cohesive manner, wherein the housing has an expansion element, **characterised in that** a sealing element formed as a metal bellows (20) is arranged on the housing, covering and sealing the expansion element, and that, as an expansion element, the housing or a region of the housing has slots (9, 10) which run transversely with respect to the longitudinal direction of the tubes and in the circumferential direction of the housing, which in each case extend only over part of the circumference and which in the circumferential direction partly overlap slots arranged axially offset.

2. Exhaust gas heat exchanger according to a preceding claim, **characterised in that** at least one group of slots (9, 10) having at least two slots is provided in the housing.

3. Exhaust gas heat exchanger according to a preceding claim, **characterised in that** the at least one group of slots (9, 10) is arranged in a central region of the housing, as viewed in the longitudinal direction of the heat exchanger.

4. Exhaust gas heat exchanger according to a preceding claim, **characterised in that** the at least one group of slots (9, 10) is arranged in an end region or close to an end region of the housing, as viewed in the longitudinal direction of the heat exchanger.

5. Exhaust gas heat exchanger according to a preceding claim, **characterised in that** two groups of slots (9, 10) are provided.

6. Exhaust gas heat exchanger according to claim 5, **characterised in that** the two groups of slots (9, 10) are arranged in the two end regions or close to the end regions of the housing.

7. Exhaust gas heat exchanger according to claim 5, **characterised in that** the groups of slots (9, 10) has at least two or a multiplicity of slots, such as three, four, five, six, etc. slots.

8. Exhaust gas heat exchanger according to one preceding claim 1 to 7, **characterised in that** four slots are arranged in the housing or in a group of slots (9, 10), in each case two extending over less than half the circumference in one of two transverse planes and slotted regions of the other transverse plane being located opposite the non-slotted regions of a transverse plane.

9. Exhaust gas heat exchanger according to one preceding claim 1 to 7, **characterised in that**, given an arrangement of two slots per group of slots (9, 10), the slots are spaced apart and are formed in such a way that they run beside one another in a partial region of their extent and leave a narrow web between themselves.

10. Exhaust gas heat exchanger according to one preceding claim 1 to 7, **characterised in that**, given an arrangement of three slots per group of slots (9, 10), the slots are spaced apart and are formed in such a way that they run beside one another in a partial region of their extent and leave two narrow webs between themselves.

11. Exhaust gas heat exchanger according to one of the preceding claims, **characterised in that**, given a group of slots (9, 10), at least two webs or a multiplicity of webs, such as three, four, etc., are formed, as viewed over the circumference of the housing.

12. Exhaust gas heat exchanger according to claim 11, **characterised in that**, given a group of slots (9, 10) with an arrangement of two webs per group, the webs lie opposite one another, as viewed in the radial direction of the housing.

13. Exhaust gas heat exchanger according to claim 11, **characterised in that**, given a group of slots (9, 10) with an arrangement of two or more webs per group, the webs are distributed uniformly, as viewed in the circumferential direction of the housing.

14. Exhaust gas heat exchanger according to one of the preceding claims, **characterised in that** four webs are formed by four slots which partly intersect at four points of the housing.

15. Exhaust gas heat exchanger according to one of the preceding claims, **characterised in that** four times two parallel webs are formed by six slots which partly intersect at four points of the housing.

16. Exhaust gas heat exchanger according to one of the preceding claims, **characterised in that** the slots (9, 10) have a teardrop shape in their end regions.

17. Exhaust gas heat exchanger according to one of the preceding claims, **characterised in that** the slots (9, 10) are introduced into the housing by means of one of the following processes: laser cutting, water jet cutting, sawing, milling, erosion or punching.

18. Exhaust gas heat exchanger according to one of the preceding claims, **characterised in that** the expansion element and/or the sealing element is formed from one of the following materials: metal, steel, elastomer, silicone.

19. Exhaust gas heat exchanger according to one of the preceding claims, **characterised in that** the expansion element and/or the sealing element is connected to a housing part or two housing parts or is formed in one piece with the latter.

20. Exhaust gas heat exchanger according to one of the preceding claims, **characterised in that** the expansion element and/or the sealing element is connected to the housing by welding, soldering, by means of clamping elements or by means of adhesive bonding.

## Revendications

1. Echangeur de chaleur de gaz d'échappement (1) comprenant un faisceau de tubes traversé par des gaz d'échappement, et un carter traversé par un agent de refroidissement, où les extrémités tubulaires du faisceau de tubes sont reliées aux plateaux à tubes par liaison de matière, les plateaux à tubes étant reliés au carter par liaison de matière, et où le carter présente un élément de dilatation,
**caractérisé en ce qu'**un élément d'étanchéité, configuré comme un soufflet métallique (20), est disposé sur le carter, lequel élément d'étanchéité recouvre et assure l'étanchéité de l'élément de dilatation, et **en ce que** le carter ou une zone du carter, en tant qu'élément de dilatation, présente des fentes (9, 10) s'étendant de façon transversale par rapport à la direction longitudinale des tubes et dans la direction circonférentielle du carter, fentes qui s'étendent à chaque fois seulement sur une partie de la circonférence et se chevauchent partiellement dans la direction circonférentielle, avec des fentes disposées en étant décalées axialement.

2. Echangeur de chaleur de gaz d'échappement selon la revendication précédente, **caractérisé en ce qu'**il est prévu, dans le carter, au moins un groupe de fentes (9, 10) comprenant au moins deux fentes.

3. Echangeur de chaleur de gaz d'échappement selon l'une ou l'autre des revendications précédentes, **caractérisé en ce que** le groupe de fentes (9, 10), au moins au nombre de un, est disposé, vu dans la direction longitudinale de l'échangeur de chaleur, dans une zone centrale du carter.

4. Echangeur de chaleur de gaz d'échappement selon l'une quelconque des revendications précédentes, **caractérisé en ce que** le groupe de fentes (9, 10), au moins au nombre de un, est disposé, vu dans la direction longitudinale de l'échangeur de chaleur, dans une zone d'extrémité ou à proximité d'une zone d'extrémité du carter.

5. Echangeur de chaleur de gaz d'échappement selon l'une quelconque des revendications précédentes, **caractérisé en ce qu'**il est prévu deux groupes de fentes (9, 10).

6. Echangeur de chaleur de gaz d'échappement selon la revendication 5, **caractérisé en ce que** les deux groupes de fentes (9, 10) sont disposés aux deux zones d'extrémités ou à proximité des zones d'extrémités du carter.

7. Echangeur de chaleur de gaz d'échappement selon la revendication 5, **caractérisé en ce que** les groupes de fentes (9, 10) présentent au moins deux ou une multiplicité de fentes, à savoir trois, quatre, cinq, six, etc. fentes.

8. Echangeur de chaleur de gaz d'échappement selon l'une quelconque des revendications 1 à 7, **caractérisé en ce que** quatre fentes sont disposées dans le carter ou dans un groupe de fentes (9, 10), où deux fentes, dans un des deux plans transversaux, s'étendent à chaque fois sur une étendue inférieure à la demi-circonférence, et où les zones fendues d'un plan transversal font face à des zones non fendues de l'autre plan transversal.

9. Echangeur de chaleur de gaz d'échappement selon l'une quelconque des revendications 1 à 7, **caractérisé que** dans le cas d'un agencement de deux fentes par groupe de fentes (9, 10), les fentes sont espacées et sont configurées de manière telle, qu'elles s'étendent les unes à côté des autres dans une zone partielle de leur étendue et laissent entre elles une partie pleine étroite.

10. Echangeur de chaleur de gaz d'échappement selon l'une quelconque des revendications précédentes 1 à 7, **caractérisé en ce que** dans le cas d'un agencement de trois fentes par groupe de fentes (9, 10), les fentes sont espacées et sont configurées de manière telle, qu'elles s'étendent les unes à côté des autres dans une zone partielle de leur étendue et laissent entre elles deux parties pleines étroites.

11. Echangeur de chaleur de gaz d'échappement selon l'une quelconque des revendications précédentes, **caractérisé en ce que** dans le cas d'un groupe de fentes (9, 10), vu sur la circonférence du boîtier, sont configurées au moins deux parties pleines ou une multiplicité de parties pleines, à savoir trois, quatre, etc.

12. Echangeur de chaleur de gaz d'échappement selon la revendication 11, **caractérisé en ce que** dans le cas d'un groupe de fentes (9, 10), concernant un agencement de deux parties pleines par groupe, les parties pleines, vues dans le sens radial du carter, se font face.

13. Echangeur de chaleur de gaz d'échappement selon la revendication 11, **caractérisé en ce que** dans le cas d'un groupe de fentes (9, 10), concernant un agencement de deux parties pleines ou plus, par groupe, les parties pleines, vues dans la direction circonférentielle du carter, sont réparties de façon uniforme.

14. Echangeur de chaleur de gaz d'échappement selon l'une quelconque des revendications précédentes, **caractérisé en ce que** quatre parties pleines sont formées par quatre fentes qui se coupent partiellement au niveau de quatre emplacements du carter.

15. Echangeur de chaleur de gaz d'échappement selon l'une quelconque des revendications précédentes, **caractérisé en ce que** quatre fois deux parties pleines parallèles sont formées par six fentes qui se coupent partiellement au niveau de quatre emplacements du carter.

16. Echangeur de chaleur de gaz d'échappement selon l'une quelconque des revendications précédentes, **caractérisé en ce que** les fentes (9, 10) présentent, dans leurs zones d'extrémités, une forme de goutte.

17. Echangeur de chaleur de gaz d'échappement selon l'une quelconque des revendications précédentes, **caractérisé en ce que** les fentes (9, 10) sont réalisées dans le carter par l'un des procédés suivants : découpe au laser, découpe au jet d'eau, sciage, fraisage, érosion ou découpe à l'emporte-pièce.

18. Echangeur de chaleur de gaz d'échappement selon l'une quelconque des revendications précédentes, **caractérisé en ce que** l'élément de dilatation et / ou l'élément d'étanchéité est constitué de l'un des matériaux suivants : métal, acier, élastomère, silicone.

19. Echangeur de chaleur de gaz d'échappement selon l'une quelconque des revendications précédentes, **caractérisé en ce que** l'élément de dilatation et / ou l'élément d'étanchéité est assemblé à une partie du carter ou à deux parties du carter, ou bien est configuré en formant une seule et même pièce avec ledit carter.

20. Echangeur de chaleur de gaz d'échappement selon l'une quelconque des revendications précédentes, **caractérisé en ce que** l'élément de dilatation et / ou l'élément d'étanchéité est assemblé au carter, par soudage, brasage, au moyen d'éléments de serrage ou par collage.
